(19) Europäisches Patentamt
European Patent Office
Office européen des brevets

(11) EP 4 397 710 B1

(12) EUROPEAN PATENT SPECIFICATION

(45) Date of publication and mention of the grant of the patent:
**09.09.2026 Bulletin 2026/37**

(21) Application number: **24172267.7**

(22) Date of filing: **03.04.2020**

(51) International Patent Classification (IPC):
***C08G 59/40*** *(2006.01)* ***C08J 9/00*** *(2006.01)*
***C08L 63/00*** *(2006.01)*

(52) Cooperative Patent Classification (CPC):
(C-Sets available)
**C08G 59/4071; C08J 9/0038; C08J 9/08; C08L 63/00;** C08J 2201/02; C08J 2201/026; C08J 2203/02; C08J 2363/00; C08K 5/521 (Cont.)

(54) **TWO-PART PHOSPHATE ESTER ELASTOMERIC EPOXY COMPOSITION AND METHOD OF USE THEREOF**

ZWEITEILIGE PHOSPHATESTERELASTOMEREPOXIDZUSAMMENSETZUNG UND VERFAHREN ZUR VERWENDUNG DAVON

COMPOSITION ÉPOXY ÉLASTOMÈRE D’ESTER DE PHOSPHATE EN DEUX PARTIES ET SON PROCÉDÉ D’UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.04.2019 US 201962828693 P**

(43) Date of publication of application:
**10.07.2024 Bulletin 2024/28**

(62) Document number(s) of the earlier application(s) in accordance with Art. 76 EPC:
**20723244.8 / 3 947 514**

(73) Proprietor: **Zephyros Inc.**
**Romeo, MI 48065 (US)**

(72) Inventors:
- **CZAPLICKI, Michael**
  **Romeo, Michigan, 48065 (US)**
- **MORTAZAVIAN, Hamid**
  **Romeo, Michigan, 48065 (US)**
- **HICKS, Kevin**
  **Romeo, Michigan, 48065 (US)**

(74) Representative: **Kutzenberger Wolff & Partner**
**Waidmarkt 11**
**50676 Köln (DE)**

(56) References cited:
**EP-A1- 0 794 236**
**WO-A1-2008/131918**
**US-A- 2 831 820**
**US-A- 3 282 863**
**US-A- 5 648 401**

- **XIAN-LING FU ET AL: "Two-dimensional cardonal-derived zirconium phosphate as flame retardant and smoke depressant for epoxy resins.e", POLYMER DEGRADATION FAND STABILITY, vol. 151, 3 June 2018 (2018-06-03), pages 172 - 180, XP002799362**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 63/00, C08K 5/521, C08L 63/00, C08L 63/00;**
C08K 5/521, C08L 63/00

## Description

FIELD

The present teachings relate generally to a composition having a first component and a second component and a method of using the composition. More specifically, the present teachings relate to two component epoxy and phosphate ester-based cured elastomeric materials capable of developing adhesion to a variety of substrates that may be used as a foamed-in-place gasket and sealant materials. The invention is set out in the appended claims.

BACKGROUND

Gasket and sealant materials are frequently employed in the transportation and construction industries for a variety of purposes. For example, gasket materials may provide one or more of sealing, water and wind isolation, dirt and dust intrusion, and rattle prevention.

Die-cut gasket and sealant materials have been employed in industry, particularly the transportation and construction industries. Typically, die-cut peel and stick gasket/sealing materials comprise foam that is formed before application on a workpiece and attachment to a workpiece is achieved via an adhesive such as a pressure sensitive adhesive. Some drawbacks of die-cut gasket/sealant materials include the extra labor and process resources inherent in the die-cutting process, waste produced by die-cutting, and the need for a separate adhesive.

In-place foaming reactions allow gasket and sealing materials to be dispensed directly onto the workpiece. Where room-temperature activation (e.g., expansion and curing) is desired, polyurethane-based foams are most common. Polyurethane foams have a number of drawbacks, some of which are inclusion of isocyanate functional monomers or oligomers, high VOC, a limited ability to adhere to certain substrates, poor hydrolysis resistance in wet or humid environments, unsuitability for use in slower reacting systems, high sensitivity to temperature changes during dispensing and foaming, and a need for high specificity in mix ratios when formulating, where each formulation is mix-ratio sensitive. Another type of in-place curing gasket/sealing materials is silicon based. These have their own drawbacks including poor adhesion to a variety of substrates, poor tear resistance, high cost, and a lack of tunability in expansion and stiffness.

As an alternative to polyurethane-based foams, phosphoric acids for in-place foaming reactions in polymeric materials have been utilized. However, reaction time with phosphoric acid is very fast which is not ideal for assembly processes that require time to locate the polymeric material onto a surface prior to foaming. Thus, a somewhat delayed reaction time may be preferable. In some situations, there might be concerns about low pH and splash hazard of phosphoric acid. Therefore, alternative materials with a higher pH and reduced splash hazard may be preferred. The difficulties of making elastomeric materials due to multifunctionality of phosphoric acid is another drawback of using phosphoric acid. There is also a significant difference in viscosity between the phosphoric acid and the polymeric material. This presents challenges to both manufacturing (e.g., mixing) and storage of the material. Phosphoric acid also has a much lower molecular weight than many polymeric materials, leading to undesirable mix ratios. Relatively similar mix ratios of 1:1,2:1, or 4:1 (typically monomeric or oligomeric material to phosphoric acid) would be preferable. Lastly, the reactive nature of phosphoric acid makes it difficult to formulate adhesive and sealant materials as so many chemical components may be unstable when utilized in conjunction with phosphoric acid due to very high reactivity. It would be preferable to have the ability to include a variety of different moieties that may be advantageous for adhesion, physical or chemical compatibility, mechanical properties, or other reasons.

International Publication No. WO 2016/149700 A1 discloses the use of phosphate esters as an alternative to phosphoric acid. Document US 3,282,863 discloses a method of forming a foamed resin body.

Notwithstanding the above teachings, there has remained a need for improved elastomeric material that may be utilized as gasket and sealing materials. There is a need for foam and form-in-place gasket and sealing materials which cure at room (e.g., ambient) temperature. There is a need for gasket and sealing materials which provide for expansion and cross-linking in a wider range of ambient temperatures compared to known gasket and sealing materials. There is a need for gasket and sealing materials which provide adhesion to a wide variety of substrates including non-treated and non-cleaned substrates. There is need for gasket and sealing materials which utilize a component capable of both curing and foaming without the need for additional components. There is a need for gasket and sealing materials which provide desirable fire, smoke, and toxicity (FST) properties while eliminating the use or lowering the amount of undesirable agents for imparting the same.

The present teachings provide one or more of the above-mentioned benefits. The gasket and sealing materials of the present disclosure may be utilized for one or more of the following: cavity filling, sealing, or damping.

## SUMMARY

The present teachings provide for a two-part system comprising: a first component including one or more epoxy resins; a second component including one or more phosphate esters; and wherein, upon mixing the first component and second component, the composition may react to create an acceptable finished product over a temperature range of about 0 °C to about 50 °C. Optionally, in order to reduce the time to reach a dry-to-touch (e.g., non-tacky) state, a heating source could be used. The appended claims are drawn to methods involving two-part systems. References to two-part systems as such essentially serve information purposes and improve the intelligibility of the description.

The present teachings provide for a two-part system comprising: a first component including: one or more epoxy resins, which may be liquid or solid epoxy resins, flexible epoxy resins, or aliphatic multifunctional epoxy resins, one or more reactive diluents, and one or more first component additives; a second component including: one or more phosphate esters including a first phosphate ester, an optional second phosphate ester, and an optional third phosphate ester; one or more second component additives; and wherein, upon mixing the first component and second component to form a curable composition, the curable composition cures at a temperature of about 0 °C to about 50 °C. Again, the appended claims are drawn to methods involving two-part systems. References to two-part systems as such essentially serve information purposes and improve the intelligibility of the description.

The second component may include the third phosphate ester. The second component may include at least one phosphate ester that is a product of the reaction between a phosphoric acid and a mono-functional epoxy. The one or more phosphate esters may include a phosphate ester derived from cashew nutshell liquid (CNSL). The second component may include some added phosphoric acid.

The first component may include one or more first component additives. The one or more first component additives may include a metal carbonate which may be calcium carbonate, one or more minerals, reinforcing fibers, hydrophobic silica, or any combination thereof. The calcium carbonate may be present in an amount from about 2% to about 40% by weight of the A-side of the composition (e.g., the first component). The calcium carbonate may include an ultrafine calcium carbonate, a fine calcium carbonate, a medium fine calcium carbonate, or any combination thereof. The first component may include the fine calcium carbonate in an amount from about 4% to about 8% by weight. The first component may include the medium fine calcium carbonate in an amount from about 13% to about 18% by weight.

The second component may include one or more second component additives. The one or more second component additives may include minerals, reinforcing fiber, hydrophobic silica, or any combination thereof.

The one or more epoxy resins may include one or more liquid epoxy resins, one or more flexible epoxy resins, one or more aliphatic multifunctional epoxy resins, one or more reactive diluents, or any combination thereof. The one or more epoxy resins may include a reaction product of epichlorohydrin and bisphenol A. The one or more epoxy resins may be present in an amount from about 5% to about 30% by weight. The one or more epoxy resins (which may be flexible epoxy resin) may include a di-functional glycidyl ether epoxy resin, an unmodified BPA-based epoxy resin, a multifunctional epoxidized polybutadiene resin, or any combination thereof To produce a final composition that is elastomeric, it is expected that one or more of the formulated products constituent ingredients would be flexible or elastomeric. The one or more epoxy resins may be present in an amount from about 10% to about 45% by weight. The one or more aliphatic multifunctional epoxy resins may include an epoxidized sorbitol. The one or more aliphatic multifunctional epoxy resins may be present in an amount from about 1% to about 30% by weight. The one or more reactive diluents may include a polyglycol diglycidyl ether, a trimethylolethane triglycidyl either, or both. The one or more reactive diluents may be present in an amount from about 4% to about 25% by weight.

The reaction temperature may be from about 0 °C to about 50 °C. The reaction temperature may be from about 15 °C to about 25 °C. The cure time of the curable composition may be from about 5 minutes to about 25 minutes which could be accelerated using a heating source. The cure time of the curable composition may be from about 7 minutes to about 10 minutes. The resulting reaction product may have a volume expansion from about 100% to about 800%. The resulting reaction product may have a volume expansion from about 400% to about 500%.

The curable composition may be dispensed upon any surface that may benefit from a foamed elastomeric material. This includes a workpiece consisting of an automobile component. The reaction product of the curable composition is a sealant. The two-part system may be free of latent curing agents, curing accelerators, or both.

The invention is directed to a method comprising: providing a two-part system, the two-part system including a first component and a second component, the first component including one or more epoxy resins and the second component including one or more phosphate esters; and mixing the first component and the second component to form a reaction product; and wherein, upon mixing the first component and second component to form a curable composition, the curable composition cures at a temperature of about 0 °C to about 50 °C, including

- forming a sealant with the cured composition, and
- dispensing the cured composition upon a workpiece consisting of an automobile component.

The second component may include two or three different phosphate esters. The first component may include one or more first component additives. The second component may include one or more second component additives. The one or more first component additives may include calcium carbonate.

The method may include curing the composition at a temperature of from about 10 °C to about 35 °C. Curing may occur at a temperature of from about 15 °C to about 25 °C. A cure time of the curable composition may be from about 5 minutes to about 15 minutes. A cure time of the curable composition may be from about 7 minutes to about 10 minutes. The reaction product may have a volume expansion from about 100% to about 800%. The reaction product may have a volume expansion from about 400% to about 500%.

The method includes dispensing the curable composition upon a workpiece consisting of an automobile component. The reaction product of the curable composition is a sealant. The two-part system may be free of latent curing agents, curing accelerators, or both.

DETAILED DESCRIPTION

The present teachings meet one or more of the above needs by the improved compositions and methods described herein. The explanations and illustrations presented herein are intended to acquaint others skilled in the art with the teachings, its principles, and its practical application. Those skilled in the art may adapt and apply the teachings in its numerous forms, as may be best suited to the requirements of a particular use. Accordingly, the specific embodiments of the present teachings as set forth are not intended as being exhaustive or limiting of the teachings. The scope of the teachings should, therefore, be determined not with reference to the above description, but should instead be determined with reference to the appended claims, along with the full scope of equivalents to which such claims are entitled. Other combinations are also possible as will be gleaned from the following claims, which are also hereby incorporated by reference into this written description.

The application claims the priority benefit of the filing date of United States Provisional Application Serial No. 62/828,693, filed April 3, 2019.

The present teachings provide a composition, that may be a two-part composition comprising an A-side (i.e., "first component") and a B-side (i.e., "second component"). Upon mixing, the two-part composition may form a curable composition and the reaction product, when fully cured, may be an elastomeric material that is utilized as a sealing material.

The A-side may comprise one or more epoxy resins, one or more additives, one or more monomers, or both. The one or more epoxy resins may include one or more liquid epoxy resins, one or more flexible epoxy resins, one or more epoxy phenol novolac resins, one or more aliphatic multifunctional epoxy resins, one or more reactive diluents, one or more silane modified epoxy resins, one or more monomers, or any combination thereof. The one or more additives may include one or more toughening agents (e.g., core-shell polymeric particles), metal carbonate, minerals, reinforcing fiber, hydrophobic silica, tabular alumina, or any combination thereof.

The B-side may comprise one or more phosphate esters, phosphoric acid, one or more additives, one or more monomers, or any combination thereof. The one or more phosphate esters may include a first phosphate ester, a second phosphate ester, a third phosphate ester, or any combination thereof. The one or more additives may include, minerals, reinforcing fiber, hydrophobic silica, or any combination thereof.

The one or more phosphate esters may be one or more customized phosphate esters. The one or more customized phosphate esters may be produced by the reaction of phosphoric acid and various alcohols. The one or more customized phosphate esters may be produced by the reaction of phosphoric acid and an epoxide group of a phosphate ester precursor (i.e., component not yet reacted with phosphoric acid). The one or more customized phosphate esters may be produced by the reaction of phosphoric acid with the glycidyl ether of cashew nutshell liquid (CNSL) such as that sold under the trade name Cardolite® LITE 2513HP, commercially available from Cardolite Corporation, Monmouth Junction NJ. The one or more customized phosphate esters may be produced by the reaction of phosphoric acid with a phenyl glycidyl ether such as that sold under the trade name ERISYS® GE-13, commercially available from CVC Thermoset Specialties, Moorestown, NJ. The one or more customized phosphate esters may be produced by the reaction of phosphoric acid with 2-ethylhexyl glycidyl ether such as that sold under the trade name ERISYS® GE-6, commercially available from CVC Thermoset Specialties, Moorestown, NJ. The one or more customized phosphate esters may be produced by the reaction of phosphoric acid with an epoxidized para-tertiary butyl phenol such as that sold under the trade name ERISYS® GE-11, commercially available from CVC Thermoset Specialties, Moorestown, NJ, or any other mono-functional epoxy. The one or more customized phosphate esters can be the reaction product of phosphoric acid and a mono-epoxide functional molecule in general.

The one or more phosphate esters may be one or more commercially pre-reacted phosphate esters. The one or more commercially pre-reacted phosphate esters, when swapped into the B-side in place of a customized phosphate ester may result in a curable composition that is slower reacting and foaming presumably due to a lower level of free phosphoric acid and therefore higher pH of the B-side. Reacting and foaming of the one or more commercially pre-reacted phosphate

esters may be improved (i.e., reaction speed may be increased) by the addition of phosphoric acid in the B-side. The one or more commercially pre-reacted phosphate esters may have a pH of from about 1 to about 3 in aqueous solution. The one or more commercially pre-reacted phosphate esters may have a viscosity of about 10,000 cP to about 42,500 cP at 25 °C as measured according to ASTM D445. The one or more commercially pre-reacted phosphate esters may be a nonyl phenol ethoxylated phosphate ester. Examples of suitable commercially pre-reacted phosphate esters may be those sold under the trade names Dextrol™ OC-110, Dextrol OC-40, and Strodex MO-100 commercially available from Ashland, Inc. (Covington, KY).

The commercially pre-reacted phosphate esters may be present in the B-side. The one or more commercially pre-reacted phosphate esters may be present in an amount of about 5% to about 50% by weight of the B-side. The one or more commercially pre-reacted phosphate esters may be present in an amount of about 0.1% to about 30% by weight of the B-side. The one or more commercially pre-reacted phosphate esters may be present in an amount of about 10% to about 14% by weight of the B-side. The one or more commercially pre-reacted phosphate esters may be present in an amount of about 12% by weight of the B-side.

The one or more phosphate esters may be produced by a reaction of a range of stoichiometric ratios of phosphate ester precursors to phosphoric acid. The one or more phosphate esters may be produced by a reaction of about 0.7:1 phosphate ester precursor to phosphoric acid to about 1:0.7 phosphate ester precursor to phosphoric acid. The one or more phosphate esters may be produced by a reaction of about 0.8:1 phosphate ester precursor to phosphoric acid to about 1:0.8 phosphate ester precursor to phosphoric acid. The one or more phosphate esters may be produced by a reaction of about 0.9:1 phosphate ester precursor to phosphoric acid to about 1:0.9 phosphate ester precursor to phosphoric acid. The one or more phosphate esters may be produced by a reaction of about 1:1 phosphate ester precursor to phosphoric acid. The one or more phosphate esters may be produced by a reaction of about 0.8:1 phosphate ester precursor to phosphoric acid.

The cashew nutshell liquid (CNSL) may include chemicals commonly extracted from cashew nutshell liquid (CNSL) including anacardic acids, cardol, cardanol, or any combination thereof. Preferably, the glycidyl ether of the cashew nutshell liquid (CNSL) is a glycidyl ether of cardanol.

The one or more phosphate esters may be selected from mono-esters, di-esters, or triesters as shown below:

$$O{=}P(OR)(OH)(OH) \qquad O{=}P(OR)(OR)(OH) \qquad O{=}P(OR)(OR)(OR)$$

mono-ester    Di-ester    Tri-ester

The one or more phosphate esters may be obtained from the reaction of epoxide groups with phosphoric acid as depicted below:

OR

OR

The B-side may comprise one or more phosphate esters, one or more phosphate ester precursors, or both. The B-side may comprise one or more phosphate ester precursors that may be combined with phosphoric acid prior to combination with the A-side. The B-side may comprise one or more phosphate esters that are pre-reacted (i.e., the epoxide and phosphate reaction) before addition to the B-side.

The first phosphate ester may be the reaction product of phosphoric acid with the glycidyl ether of cashew nutshell liquid (CNSL) (e.g., Cardolite® LITE 2513HP). The second phosphate ester may be the reaction product of a stoichiometric amount of about 1:1 2-ethylhexyl glycidyl (e.g., ERISYS® GE-6) to phosphoric acid. The third phosphate ester may be the reaction product of a stoichiometric amount of 0.8:1 phosphoric acid with 2-ethylhexyl glycidyl ether (e.g., ERISYS® GE-6). However, there are numerous possibilities for the first, second, or third phosphate ester.

The first phosphate ester may be present in an amount from about 10% to about 60% by weight of the B-side. The first phosphate ester may be present in an amount from about 25% to about 35% by weight of the B-side. The first phosphate ester may be present in an amount from about 28% to about 32% by weight of the B-side. The first phosphate ester may be present in an amount of about 32% by weight of the B-side. The second phosphate ester may be present in an amount from about 5% to about 40% by weight of the B-side. The second phosphate ester may be present in an amount from about 15% to about 25% by weight of the B-side. The second phosphate ester may be present in an amount from about 18% to about 22% by weight of the B-side. The second phosphate ester may be present in an amount of about 21% by weight of the B-side. The third phosphate ester may be present in an amount from about 10% to about 65% by weight of the B-side. The third phosphate ester may be present in an amount from about 35% to about 45% by weight of the B-side. The third phosphate ester may be present in an amount of about 42% by weight of the B-side. The third phosphate ester may be present in an amount of about 58% by weight of the B-side. The third phosphate ester may be present in an amount of about 60% by weight of the B-side.

The B-side may include phosphoric acid. The phosphoric acid may be ortho-phosphoric acid, polyphosphoric acid, or both. The phosphoric acid may be polyphosphoric acid. The phosphoric acid may be free acid in the one or more phosphate esters, added independently from the one or more phosphate esters, or both. The addition of phosphoric acid to the B-side may result in increased expansion (e.g., foaming) of the resulting reaction product. The addition of phosphoric acid to the B-side may increase the reactivity of the two-part system to help maintain desired levels of expansion, curing, or both when temperatures are below 23 °C.

The independently added phosphoric acid may be in aqueous solution in the amount of 85% or more (i.e., "reagent grade"). The independently added phosphoric acid may be present in an amount from about 1% to about 20% by weight of the B-side. The independently added phosphoric acid may be present in an amount from about 2% to about 6% by weight of the B-side. The independently added phosphoric acid may be present in an amount of about 4% by weight of the B-side.

The one or more phosphate esters, produced from the reaction of phosphoric acid and phosphate ester precursor, may include free acid. The one or more phosphate esters may have about 1% or more free acid, about 3% or more free acid, about 5% or more free acid, about 15% or less free acid, about 13% or less free acid, or even about 11% or less free acid.

The two-part system, upon addition of the A-side and the B-side, may foam as a result of a reaction of metal carbonate or metal bicarbonate and an acid, generating the release of gas, (e.g., carbon dioxide to serve as chemical blowing agent). Such a reaction mechanism is described in U.S. Patent No. 5,648,401.

The reacting, foaming, or both may occur at a temperature of about 50 °C or less, about 30 °C or less, about 20 °C or less, or even about 0 °C or less. The curing, foaming, or both may occur at a temperature of about 0 °C or more, about 10°C or more, or even about 20 °C or more. The curing, foaming, or both may occur at a temperature from about 10 °C to about 35 °C. The curing, foaming, or both may occur at a temperature of about 10 °C. The curing, foaming, or both may occur at room temperature (e.g. at a temperature of about 15 °C to about out 25 °C). The curing, foaming, or both may occur at a temperature of about 23 °C.

The present teachings contemplate a relatively fast curing time, foaming time, or both as compared to other cure agents or cure systems that occur without the addition of a stimulus (e.g., at room temperature). The cure time of the reaction product may be 75 minutes or less, 50 minutes or less, 30 minutes or less, 20 minutes or less, 2 minutes or more, 8

minutes or more, or even 16 minutes or more. The cure time of the resulting reaction product may be from about 5 minutes to about 20 minutes. The cure time of the resulting reaction product may be about 10 minutes. The cure time of the resulting reaction product may be about 7 minutes. The cure time of the resulting reaction product may be about 5 minutes.

Foaming may begin before complete reaction of the resulting reaction product. The foaming time (i.e., the time frame within which the two-part system actively foams) of the reaction product may be 30 minutes or less or even 20 minutes or less. The foaming time of the reaction product may be from about 1 minute to about 10 minutes. The foaming time of the reaction product may be about 5 minutes. The foaming time of the reaction product may be about 7 minutes.

The A-side may include one or more epoxide-functional materials (i.e., one or more epoxy resins). The one or more epoxy resins may be any conventional dimeric, oligomeric, or polymeric epoxy resin. The one or more epoxy resins may contain at least one epoxide functional group (i.e., monofunctional) or may contain more than one epoxide functional group (i.e., multifunctional). The one or more epoxy resins may contain one or more epoxide functional group, two or more epoxide functional groups, three or more epoxide functional groups, or even four or more epoxide functional groups. The one or more epoxy resins may be modified epoxy resins (e.g., silane modified, elastomer modified, and the like). The one or more epoxy resins may be aliphatic, cycloaliphatic, aromatic, or the like, or any combination thereof. The one or more epoxy resins may be supplied as a solid (e.g., as pellets, chunks, pieces, or the like, or any combination thereof) or a liquid (e.g., a liquid epoxy resin). However, if solid resins are used, it is possible that they would first be dissolved in a liquid resin or other suitable solvent. As used herein, unless otherwise stated, an epoxy resin is a solid if it is solid at a temperature of 23 °C and is a liquid resin if it a liquid at a temperature of 23 °C. The one or more epoxy resins may include one or more liquid epoxy resins, one or more flexible epoxy resins, one or more epoxy phenol novolac resins, one or more aliphatic multifunctional epoxy resins, one or more reactive diluents, one or more silane modified epoxy resins, or any combination thereof.

The two-part system may include one or more liquid epoxy resins. The one or more liquid epoxy resins may function as a base for the epoxy resin component. The one or more liquid epoxy resins may be a reaction product of epichlorohydrin (hereinafter, "EPH") and any conventional bisphenol. The one or more liquid epoxy resins may be a reaction product of EPH and bisphenol A (hereinafter, "BPA"), bisphenol F (hereinafter, "BPF"), or both. The one or more liquid epoxy resins (which may be standard or commodity liquid epoxy resins) may have an epoxide equivalent weight (hereinafter "EEW") from about 100 g/equivalent to about 1000 g/equivalent as measured according to ASTM D1652-97. The one or more liquid epoxy resins may have an epoxide percentage from about 20 to about 25. The one or more liquid epoxy resins may have a viscosity from about 10 cP to about 100,000 cP at 25 °C as measured according to ASTM D445. An example of a suitable BPA-based liquid epoxy resin may be D.E.R.™ 331, commercially available from The Olin Corporation (Clayton, MO). An example of a suitable BPF-based liquid epoxy resin may be YDF-170 commercially available from Kukdo Chemical (South Korea). The unit cP can be converted into the SI-unit mPas as follows: 1 cP = 1 mPas.

The one or more liquid epoxy resins may be present as a part of the A-side. The one or more liquid epoxy resins may be present in an amount from about 4% to about 50% by weight of the A-side. The one or more liquid epoxy resins may be present in an amount from about 10% to about 30% by weight of the A-side. The one or more liquid epoxy resins may be present in an amount about 8% by weight of the A-side.

The two-part system may include one or more flexible epoxy resins. The one or more flexible epoxy resins may function to reduce the elastic modulus, increase strain to failure, decrease time to recover, decrease the degree of cross-linking density in the reaction product, increase impact resistance, improve adhesion, improve peel resistance, or any combination thereof, of the reaction product. The one or more flexible epoxy resins may improve the gas entrapment capability of the two-part system in part by acting as a viscosity modifier or reducing gas permeability. The one or more flexible epoxy resin may be a di-functional glycidyl ether epoxy resin, an unmodified BPA-based epoxy resin, a multi-functional epoxidized polybutadiene resin, or any combination thereof. The one or more flexible epoxy resins may have an EEW of about 260 to about 500 as measured according to ASTM D1652-97. The one or more flexible epoxy resins may have a viscosity of about 700 cP to about 500,000 cP at 25 °C as measured according to ASTM D445. Examples of suitable flexible epoxy resins may include NC-514 (commercially available from Cardolite Corporation, Monmouth Junction NJ), Araldite® PY 4122 (commercially available from Huntsman Advanced Materials, Inc., Salt Lake City, UT), Poly bd® 605E (commercially available from Cray Valley, Exton, PA), or any combination thereof.

The one or more flexible epoxy resins may be present in the A-side. The one or more flexible epoxy resins may be present in an amount from about 10% to about 50% by weight of the A-side. The one or more flexible epoxy resins may be present in an amount from about 35% to about 45% by weight of the A-side. The one or more flexible epoxy resins may be present in an amount of about 39% by weight of the A-side. The one or more flexible epoxy resins may include a di-functional glycidyl ether epoxy resin in the amount of from about 10% to about 18% by weight of the A-side, an unmodified BPA-based epoxy resin in an amount from about 8% to about 16% by weight of the A-side, and a multifunctional epoxidized polybutadiene resin in an amount from about 8% to about 16% by weight of the A-side. The one or more flexible epoxy resins may include a di-functional glycidyl ether epoxy resin in the amount of about 14% by weight of the A-side, an unmodified BPA-based epoxy resin in an amount of about 12% by weight of the A-side, and a multifunctional epoxidized

polybutadiene resin in an amount of about 12% by weight of the A-side. The two-component system may include a di-functional glycidyl ether epoxy resin, a difunctional epoxy derived from cardanol, and a multifunctional epoxidized polybutadiene resin, respectfully in a ratio of about 1:1:1. The two-component system may include a di-functional glycidyl ether epoxy resin, a difunctional epoxy derived from cardanol, and a multifunctional epoxidized polybutadiene resin, respectfully in a ratio of about 1:0.8:0.8. The two-component system may include a di-functional glycidyl ether epoxy resin, a difunctional epoxy derived from cardanol, and a multifunctional epoxidized polybutadiene resin, respectfully in a ratio of about 1:0.9:0.9.

The two-part system described herein may also include one or more epoxy phenol novolac resins. The one or more epoxy phenol novolac resins may function to impart chemical resistance, solvent resistance, temperature resistance, or any combination thereof, to the reaction product. The one or more epoxy phenol novolac resins may be present as a part of the A-side. The one or more epoxy phenol novolac resins may have an EEW from about 165 g/equivalent to about 183 g/equivalent as measured according to ASTM D1652-97. The one or more epoxy phenol novolac resins may have an average epoxy functionality from about 2.1 to about 6.5. One of the primary functions of the EPN resins is to increase network crosslink density via multifunctionality. This is also important to control reaction speed and the ability to prevent foam collapse during and/or after the reaction process. The one or more epoxy phenol novolac resins may have a viscosity from about 18,000 cP to about 30,000 cP at 25°C as measured according to ASTM D445. Examples of suitable epoxy phenol novolac resins may be those sold under the trade names Epalloy 8250 and Epalloy 8330, commercially available from CVC Thermoset Specialties (Moorestown, NJ).

The one or more epoxy phenol novolac resins may be present in an amount from about 30% to about 50% by weight of the A-side. The one or more epoxy phenol novolac resins may be present in an amount of about 35% to about 45% by weight of the first component or A-side. The one or more epoxy phenol novolac resins may be present in an amount of about 38% to about 42% by weight of the A-side. The one or more epoxy phenol novolac resins may be present in an amount of about 42% by weight of the A-side. The one or more epoxy phenol novolac resins may include an about 3.6 functional epoxy phenol novolac resin present in an amount of from about 2% to about 18% by weight of the A-side and an about 6.5 functional epoxy novolac resin present in an amount of from about 22% to about 32% by weight of the A-side. The one or more epoxy phenol novolac resins may include an about 3.6 functional epoxy phenol novolac resin present in an amount of about 15% by weight of the A-side and an about 6.5 functional epoxy novolac resin present in an amount of about 28% by weight of the A-side. The two-part system may include an about 3.6 functional epoxy phenol novolac resin and an about 6.5 functional epoxy phenol novolac resin at a ratio of about 1:2 to about 1:3.

The two-part system may include one or more aliphatic multifunctional epoxy resins. The one or more aliphatic multifunctional epoxy resins may function to increase the degree of cross-linking of the reaction product, increase the chemical resistance of the reaction product, or both. These resins have the ability to increase the crosslink density of the resultant reaction product while preserving or enhancing the elastomeric nature of the reaction product. In general, multifunctional materials will make the reaction product less elastomeric. The one or more aliphatic multifunctional epoxy resins may include an epoxidized sorbitol. The one or more aliphatic multifunctional epoxy resins may have an EEW from about 160 g/equivalent to about 195 g/equivalent as measured according to ASTM D1652-97. The one or more aliphatic multifunctional epoxy resins may have a viscosity from about 4,000 cP to about 18,000 cP at 25 °C as measured according to ASTM D445. Examples of suitable aliphatic multifunctional epoxy resins may be those sold under the trade names ERISYS® GE-60 and ERISYS® GE-61, commercially available from CVC Thermoset Specialties (Moorestown, NJ).

The one or more aliphatic multifunctional epoxy resins may be present as a part of the A-side. The one or more aliphatic multifunctional epoxy resins may be present in an amount from about 5% to about 20% by weight of the A-side. The one or more aliphatic multifunctional epoxy resins may be present in an amount from about 8% to about 16% by weight of the A-side. The one or more aliphatic multifunctional epoxy resins may be present in an amount from about 10% to about 14% by weight of the A-side. The one or more aliphatic multifunctional epoxy resins may be present in an amount of about 12% by weight of the A-side.

The two-part system may include one or more reactive diluents. The one or more reactive diluents may function to reduce the overall viscosity of the two-part system, in order to modify the dispensing process or the flow of the two-part system on a workpiece after dispensing, decrease the degree of cross-linking of the reaction product when monofunctional. When statistically more than difunctional, the diluent may increase crosslink density. The one or more reactive diluents may be polymeric, whereby the reactive diluent may increase the flexibility of the reaction product; the one or more reactive diluents may be multifunctional, whereby the reactive diluent may promote increased crosslinking and impart chemical resistance on the reaction product; or both. The one or more reactive diluents may include a polyglycol diglycidyl ether, a trimethylolethane triglycidyl either, or both. The one or more reactive diluents may have an EEW from about 100 g/equivalent to about 300 g/equivalent as measured according to ASTM D1652-97. The one or more reactive diluents may have a viscosity of about 10 cP to about 1000 cP at 25°C as measured according to ASTM D445. An example of a suitable reactive diluents may be those sold under the trade names ERISYS® GE-31 and ERISYS® GE-24, commercially available from CVC Thermoset Specialties (Moorestown, NJ).

The one or more reactive diluents may be present in an amount from about 5% to about 20% by weight of the A-

side. The one or more reactive diluents may be present in an amount from about 8% to about 16% by weight of the A-side. The one or more reactive diluents may be present in an amount from about 10% to about 14% by weight of the A-side. The one or more reactive diluents may be present in an amount of about 13% by weight of the A-side. The one or more reactive diluents may include a polyglycol diglycidyl ether present in an amount from about 2% to about 6% by weight of the A-side, and a trimethylolethane triglycidyl either present in an amount from about 6% to about 14% of the A-side. The one or more reactive diluents may include a polyglycol diglycidyl ether present in an amount of about 4% by weight of the A-side, and a trimethylolethane triglycidyl either present in an amount of about 9% of the A-side. The two-part system may include a polyglycol diglycidyl ether and a trimethylolethane triglycidyl ether respectively at a ratio of about 1:2 to about 1:3.

The two-part system may include one or more silane modified epoxy resins. The one or more silane modified epoxy resins may function to impart improved adhesion to the reaction product, particularly adhesion to glass, metals, or both. An example of a suitable silane modified epoxy resin may be that sold under the trade name EPOKUKDO® KSR-177 commercially available from Kukdo Chemical (South Korea). Another suitable material would be a silicone prepolymer with cycloaliphatic epoxide groups. An example of one such material is available under the trade name Silmer EPC Di-50, available from Siltech Corporation in Ontario, Canada.

The one or more silane modified epoxy resins may be present in the A-side. The one or more silane modified epoxy resins may be present in an amount of about 1% to about 15% by weight of the A-side. The one or more silane modified epoxy resins may be present in an amount of about 2% to about 6% by weight of the A-side. The one or more silane modified epoxy resins may be present in an amount of about 4% by weight of the A-side.

The two-part system may include one or more monomers. The one or more monomers may function to improve adhesion properties of the reaction product, particularly to metal substrates, increase flexibility of the reaction product, increase impact resistance of the reaction product, or any combination thereof. The one or more monomers may be monofunctional, difunctional, or even polyfunctional. The one or monomers may be an esterification reaction product of an alcohol and acrylic acid or methacrylic acid. The one or more monomers may be a monofunctional acrylic monomer. Preferably, the one or more monomers may be a mixture of methacrylate acid ester and 2-(2-ethoxyethoxy) ethyl acrylate. An example of a suitable monomer may be that sold under the trade name SR 9050 commercially available from Sartomer (Exton, PA).

The two-part system may include one or more monomers in the A-side, the B-side, or both. The one or more monomers may be present in an amount of about 0.1% to about 26% by weight of the A-side, B-side, or both the A-side and B-side in combination. The one or more monomers may be present in an amount of about 12% to about 24% by weight of the A-side, B-side, or both the A-side and B-side in combination. The one or more monomers may be present in an amount of about 14% to about 22% by weight of the A-side, B-side, or both the A-side and B-side in combination. The one or more monomers may be present in an amount of about 18% by weight of the A-side, B-side, or both the A-side and B-side in combination.

The rate of cure, the degree of crosslinking, or both may be a function of the functionality of the two-part system (A-side and B-side). A higher functionality (i.e., the average number of functional groups on one or more polymerizable components) may be desired for a two-part system having pre-polymerized components that are shorter in polymer length (i.e., lower viscosity); whereby the lack of structural backbone resulting from shorter polymers is compensated by a higher degree of crosslinking. A lower functionality may be desired for a two-part system having pre-polymerized components that are longer in length (i.e., typically resulting in higher viscosity); whereby the presence of more structural backbone resulting from longer polymers precludes the need for high functionality.

The B-side functionality may at least partially be reduced by the reaction of metal carbonate in the A side with phosphoric acid and the phosphate esters and as a result, the functionality of the B-side may be reduced. The A-side may include components with increased functionality in order to compensate for a reduced functionality of the B-side. The A-side may be formulated with increased functionality by using reactive ingredients with functionality higher than two.

The two-part system may include one or more additives. The one or more additives may include one or more toughening agents, calcium carbonate, minerals, reinforcing fiber, hydrophobic silica, tabular alumina, or any combination thereof.

The two-part system may include one or more toughening agents. The one or more toughening agents may function to distribute energy within the reaction product (i.e., increase impact resistance). The one or more toughening agents may contribute to an increased T-Peel strength. The one or more toughening agents may comprise thermoplastics, thermosets or thermosettables, elastomers, the like, or any combination thereof. The one or more toughening agents may include elastomers (including elastomer containing materials), core-shell polymers (which may include but are not limited to elastomers), or both.

The core-shell polymers may comprise a first polymeric material (i.e., core material) and a second polymeric material (i.e., shell material). The first polymeric material may be entirely encapsulated by the second polymeric material. The core-shell polymer may include a first polymeric material in the amount of about 30% or more, 50% or more, or even 70% or more by weight. The first polymeric material, the second polymeric material, or both may comprise one, two, three, or even more than three polymers that are combined together, reacted together (e.g., sequentially polymerized), or both, or

may be part of separate or the same core-shell polymer systems. Examples of suitable core-shell polymers may be those sold under the trade names Kane Ace ™ MX-267 and MX-257, both commercially available from Kaneka North America LLC (Pasadena, TX).

The core-shell polymers may be present in an amount from about 1% to about 25% by weight of the A-side, B-side, or both the A-side and B-side in combination (e.g., if present in the amount of 10% by weight then it may be present in an amount of 5% in the A-side and 5% in the B-side). The core-shell polymer may be present in an amount from about 5% to about 20% by weight of the A-side, B-side, or both the A-side and B-side in combination. The core-shell polymer may be present in an amount of about 5% by weight of the A-side, B-side, or both the A-side and B-side in combination. The core-shell polymer may be present in an amount of about 17% by weight of the A-side, B-side, or both the A-side and B-side in combination.

The two-part system may include one or more metal carbonates. The one or more metal carbonates may function to produce gas in the presence of an acid, act as a filler, control the onset or total extent of the foaming (e.g., expansion) process, or both. The one or more metal carbonates may be metal carbonate or metal bicarbonate. Examples of suitable fillers include calcium carbonate, nickel carbonate, barium carbonate, sodium bicarbonate, and potassium bicarbonate. Preferably the one or more metal carbonates may include calcium carbonate. The particle size of the metal carbonate, metal bicarbonate, or both may control the expansion and cure of the two-part system, whereby the total surface area of metal carbonate, metal bicarbonate, or both, available to react with the acid is a function of both the particle size of the metal carbonate, bicarbonate, or both, and the amount present in the two-part system.

The calcium carbonate ($CaCO_3$) may be present as one or more calcium carbonate fillers. The one or more calcium carbonate fillers may have a median particle size of from about 1 to about 50 microns. The calcium carbonate may be a medium fine particle size. For example, the median particle size of the medium fine calcium carbonate may be about 22 microns. An example of a suitable medium fine calcium carbonate may be Hubercarb® Q200, commercially available from Huber Engineered Materials, Atlanta, GA. The calcium carbonate may be a fine particle size. For example, the median particle size of the fine calcium carbonate may be about 4 microns. An example of a suitable fine calcium carbonate may be Hubercarb® Q4, commercially available from Huber Engineered Materials, Atlanta, GA. The calcium carbonate may be ultra-fine particle size. For example, the median particle size of the ultra-fine calcium carbonate may be about 1 micron. An example of a suitable ultra-fine calcium carbonate may be Hubercarb® Q2, commercially available from Huber Engineered Materials, Atlanta, GA. The two-part system may include medium fine calcium carbonate, fine calcium carbonate, ultra-fine calcium carbonate, or any combination thereof.

The calcium carbonate may be present in an amount from about 1% to about 25% by weight of the A-side. The calcium carbonate may be present in an amount from about 4% to about 18% by weight of the A-side. The calcium carbonate may be present in an amount from about 8% to about 12% by weight of the A-side. The calcium carbonate may be present in an amount of about 20% by weight of the A-side. The calcium carbonate may include both a fine calcium carbonate present in an amount from about 4% to about 8% by weight of the A-side and a medium fine calcium carbonate present in an amount from about 13% to about 18% by weight of the A-side. The calcium carbonate may include both a fine calcium carbonate present in an amount of about 6% by weight of the A-side and a medium fine calcium carbonate present in an amount of about 15% by weight of the A-side. The calcium carbonate may include both a fine calcium carbonate present in an amount of about 5% by weight of the A-side and a medium fine calcium carbonate present in an amount of about 5% by weight of the A-side. The ratio of a medium fine calcium carbonate to a fine calcium carbonate may be about 3:1 to about 1:3. The ratio of medium fine calcium carbonate to a fine calcium carbonate may be about 1:1.

The calcium carbonate may include a coating. The coating may be any material that breaks down during the activation process, expansion process, or both, so that expansion is delayed, slowed, or both. The coating may be a wax, a fatty acid, or combinations thereof.

The two-part system may include one or more minerals. The one or more minerals (i.e., "mineral reinforcement") may function to structurally reinforce the reaction product. The one or more minerals may improve tensile strength, the flexural strength, or both of the reaction product. The one or more minerals may be any suitable silicate minerals including but not limited to inosilicates (e.g., Wollastonite) and phyllosilicates (e.g., Kaolinite, Vermiculite, Talc, Muscovite, etc.). The characteristic external shape of an individual crystal or crystal group of the one or more minerals may be acicular or needle-like. The median particle size of the one or more minerals may be from about 10 microns to about 20 microns. The median particle size may be from about 12 microns to about 18 microns.

The one or more minerals may include Wollastonite ($CaSiO_3$). The Wollastonite may be relatively pure (i.e., less than 2% by weight of impurities such as other metal oxides). The Wollastonite may contain impurities including one or more oxides of iron, magnesium, manganese, aluminum, potassium, sodium, or strontium substituting for calcium in the mineral structure. Examples of suitable Wollastonite may be that sold under the trade names NYGLOS® 12 and NYGLOS® 8 commercially available from NYCO Minerals Inc. (Willsboro, NY).

The one or more minerals may be present as part of the A-side, the B-side, or both. The Wollastonite may be present in an amount from about 0.1% to about 10% by weight of the A-side, B-side, or both the A-side and B-side in combination. The Wollastonite may be present in an amount from about 3% to about 7% by weight of the A-side, B-side, or

both the A-side and B-side in combination. The Wollastonite may be present in an amount of about 4% by weight of the A-side, B-side, or both the A-side and B-side in combination.

The calcined kaolin clay may be present as a part of the A-side. The calcined kaolin clay may be present in an amount from about 0.1% to about 5% by weight of the A-side. The calcined kaolin clay may be present in an amount from about 1% to about 4% by weight of the A-side, B-side, or both the A-side and B-side in combination. The calcined kaolin clay may be present in an amount of about 2% by weight A-side.

The two-part system may include one or more reinforcing fibers. The reinforcing fiber may function to structurally reinforce the reaction product. The one or more reinforcing fibers may improve tensile strength, flexural strength, or both of the reaction product. The one or more reinforcing fibers may be present in the A-side, the B-side, or both. The one or more reinforcing fibers may be dispersed homogenously within the A-side, the B-side, or both. The one or more reinforcing fibers may comprise polymeric fibers, glass fibers (i.e., fiberglass), or both. Polymeric fibers may include nylon, polyamide, polyester, polypropylene, polyethylene, polytetrafluoroethylene, aramid fibers (e.g., Kevlar®), the like, or any combination thereof. The glass fibers may include alumino-borosilicate glass ("E-glass"), alkali-lime glass ("A-glass" or "C-glass"), electrical/chemical resistance glass ("E-CR-glass"), borosilicate glass ("D-glass"), alumino-silicate glass ("R-glass" or "S-glass"), or any combination thereof. The reinforcing fiber may be chopped fiber. The reinforcing fiber may be a chopped length of about 0.1 cm or more, about 0.3 cm or more, or even about 0.6 cm or more. The reinforcing fiber may be a chopped length of about 2.0 cm or less, about 1.5 cm or less, or even about 1.0 cm or less. Examples of suitable fiberglass may be chopped strands commercially available from Jushi USA (Columbia, SC).

The reinforcing fiber may be present in the amount from about 0.01% by weight to about 3% by weight of the A-side, B-side, or both the A-side and B-side in combination. The reinforcing fiber may be present in the amount from about 0.1% by weight to about 1% by weight A-side, B-side, or both the A-side and B-side in combination. The reinforcing fiber may be present in the amount of about 0.2% by weight A-side, B-side, or both the A-side and B-side in combination. The two-part system may include one or more thixotropes to control viscosity.

The two-part system may include hydrophobic silica. The hydrophobic silica may function to control viscosity (e.g., thicken), control thixotropy, boost hydrophobia, or a combination thereof. The hydrophobic silica may be fumed silica. The hydrophobic silica may be surface treated. For example, the hydrophobic silica may be fumed silica surface-treated with polydimethylsiloxane (hereinafter "PDMS") or hexamethyldisilazane (hereinafter "HMDZ"). The hydrophobic silica may be present as part of the A-side, the B-side, or both. Examples of suitable hydrophobic silica may be that sold under the trade name AEROSIL® R 202 commercially available from Evonik Corporation (Parsippany, NJ); and those sold under the trade name CAB-O-SIL® TS-530 and TS-720 commercially available from Cabot Corporation (Boston, MA).

The hydrophobic silica may be present in an amount of about 0.25% to about 6% by weight of the A-side, B-side, or both the A-side and B-side in combination. The hydrophobic silica may be present in an amount of about 0.5% to about 4% by weight of the A-side, B-side, or both the A-side and B-side in combination. The hydrophobic silica may be present in an amount from about 1% to about 2% by weight of the A-side, B-side, or both the A-side and B-side in combination. The hydrophobic silica may be present in an amount from about 0.5 to about 2%% by weight of the A-side. The hydrophobic silica may be present in an amount from about 3% to about 5% by weight of the B-Side. The ratio of hydrophobic silica in the A-side to the B-side may be from about 1:6 to about 6:1. The ratio of hydrophobic silica in the A-side to the B-side may be about 1:4. The ratio of hydrophobic silica in the A-side to the B-side may be about 1:2 to about 2:1.

The two-part system may include tabular alumina. The tabular alumina may function to impart hardness, resistance to thermal shock, resistance to mechanical shock, high heat capacity, high electrical resistance, or any combination thereof, to the reaction product. The tabular alumina may be present in the A-side, the B-side, or both. The tabular alumina may be alpha alumina converted to its corundum form (i.e., crystalline aluminum oxide) and sintered and may be provided as graded granules or powders. The tabular alumina may be graded (i.e., separated by size) from about 44 microns to about 4760 microns. The tabular alumina may be graded to about 44 microns.

The tabular alumina may be present in an amount from about 0.1% to about 15% by weight A-side, B-side, or both the A-side and B-side in combination. The tabular alumina may be present in an amount from about 4% to about 12% by weight A-side, B-side, or both the A-side and B-side in combination. The tabular alumina may be present in an amount of about 5% by weight A-side. The tabular alumina may be present in an amount of about 10% by weight A-side.

The two-part system may include one or more functional additives for improving one or more various properties of the composition. Examples of suitable functional additives may include antioxidants, antiozonants, ultraviolet absorbers, antistatic agents, colorants, coupling agents, curing agents, flame retardants, blowing agents, heat stabilizers, impact modifiers, lubricants, plasticizers, preservatives, processing aids, stabilizers, the like, and any combination thereof.

The viscosity of the A-side, the B-side, or both may be high enough at about 23 °C in order to preclude the two-part system from undesirably flowing into areas adjacent the dispensed bead upon dispensing the two-part system on a workpiece or to control flow (i.e., permit a desired amount of flow) into areas adjacent the dispensed bead upon dispensing the two-part system. The viscosity of the A-side, B-side, or both, needed to preclude undesirable flow or control flow may depend on the size of the bead dispensed. For example, the thicker the bead of the two-part system dispensed, the higher the viscosity needed to preclude unintended flow or control flow. The viscosity of the A-side at 23 °C may be from about

20,000 cP to about 50,000 cP or even from about 35,000 cP to about 45,000 cP at very low shear rates that approximate sag conditions. The viscosity of the A-side and B-side at 23 °C may be from about 250,000 cP to about 400,000 cP. The viscosity of the A-side at 10 °C may be from about 280,000 cP to about 350,000 cP or even from about 300,000 cP to about 325,000 cP. The viscosity of the B-side at 23 °C may be from about 20,000 cP to about 50,000 cP or even from about 35,000 cP to about 45,000 cP. The viscosity of the B-side at 10 °C may be from about 130,000 cP to about 220,000 cP or even from about 175,000 cP to about 195,000 cP.

The two-part system may foam, upon mixing the A-side and B-side, more than about 50%, more than about 100%, more than about 200%, less than about 800%, less than about 700%, or even less than about 600% the two-part system's original volume. The two-part system may expand from about 400% to about 500% the two-part system's original volume. The two-part system may expand about 400% the two-part system's original volume.

The two-part system may be free of curing agents (i.e., conventional curing agents), curing accelerators, or both. Typical curing agents include lewis bases (i.e., anionic catalysts), lewis acids (i.e., cationic catalysts), UV catalysts, amines, anhydrides, phenols, thiols, or any combination thereof. In place of the aforementioned curing agents, the two-part system may cure upon a polymerization reaction, catalyzed by phosphoric acid, between phosphate esters and epoxide groups, hydroxy groups, or both. The two-part system may be both cured and caused to expand by the chemical interaction between phosphate ester and metal carbonate. It has been found that utilizing the cure and expansion system of the present disclosure may reduce the complexity of formulations by reducing the number of overall components (i.e., curing agents, curing accelerators, and blowing agents); however, the achievement of a desired expansion and time to cure is made more challenging to optimize.

In one non-limiting embodiment of the present teachings, the two-part system may include one or more of the following in the A-side ("first component"): liquid epoxy resin, flexible epoxy resin, aliphatic multifunctional epoxy resin, reactive diluent, aramid pulp, medium fine calcium carbonate, fine calcium carbonate, hydrophobic silica, and Wollastonite. The two-part system may include one or more of the following in the B-side ("second component"): a first phosphate ester, a second phosphate ester, a third phosphate ester, an aramid fiber, and hydrophobic silica.

The two-part system may be mixed together at a ratio from 1:4 to 4:1, A-side to B-side. The two-part system may be mixed together at a ratio from 1:2 to 2:1, A-side to B-side. The two-part system may be mixed together at a ratio of 1:1, A-side to B-side. The two-part system may be mixed together at a ratio of 2:1, A-side to B-side.

Non-limiting example formulation ranges in accordance with the present teachings is provided below in Table 1.

Table 1

| **First Component (A-Side)** | Weight % |
|---|---|
| *Liquid epoxy resin* | 6.0 - 10.0 |
| *Flexible epoxy resin* | 35.0 - 45.0 |
| *Aliphatic multifunctional epoxy resin* | 8.0 - 16.0 |
| *Reactive diluent* | 8.0 - 16.0 |
| *Aramid fiber* | 0.1 - 1.0 |
| *Calcium carbonate (medium fine)* | 13.0 - 18.0 |
| *Calcium carbonate (fine)* | 4.0 - 8.0 |
| *Fumed silica* | 0.5 - 2.0 |
| *Wollastonite* | 3.0 - 7.0 |

| **Second Component (B-Side)** | Weight % |
|---|---|
| *First phosphate ester* | 25.0 - 35.0 |
| *Second phosphate ester* | 15.0 - 25.0 |
| *Third phosphate ester* | 35.0 - 45.0 |
| *Aramid pulp* | 0.1 - 1.0 |
| *Fumed silica* | 3.0 - 5.0 |

One important aspect of a gasket and sealant materials discussed herein is to have improved compression set (e.g., the resistance of the composition against permanent deformation after an applied force is removed according to ASTM D3571-17). A lack of sufficient compression set results in sealing failure of the elastomeric material against water, dust, wind isolation, and rattle prevention. Test samples were compressed to 50% of the dimension of the cubes. The compressed cubes were then placed in an oven at 70 °C for 22 hours. They were removed and kept at ambient temperature for a thirty-minute recovery period. The resulting measured deformation was lower that 10%. In addition to having high recovery in compression set, a low compressive stiffness is also desirable.

It may be desirable to achieve adequate compression set (e.g., less than 10% deformation and low compressive

stiffness), uniform cell structure, long elastomeric chains, and partial open cell composition, while maintaining foam integrity. The ability to recover after deformation may be related to maintenance of a high elastic part of the complex modulus relative to the loss modulus. Storage and loss modulus are often represented as G' (shear storage modulus) and G" (shear loss modulus) measured via means such as dynamic mechanical analysis (DMA). Therefore, it is possible that structural aspects of the polymeric structure that contribute to recovery as compared to permanent deformation (e.g., creep) would be desirable. This includes incorporation of molecules with elastic elements and methods to make the material less thermoplastic (i.e. higher cross-link density) in addition to more uniform cell structure. To achieve the uniform cell structure, a combination of fine metal carbonate, aliphatic multifunctional epoxy resin, and epoxidized polybutadiene resin may be utilized. In order to maintain higher crosslink density, aliphatic multifunctional epoxy resin may be utilized. Epoxidized polybutadiene resin, di-functional glycidyl ether epoxy resin, a low viscosity epoxy resin (a reaction of epichlorohydrin and polypropylene glycol), and silicon pre polymer with a cycloaliphatic epoxy group may be utilized in the A-side in order to improve the elastomeric properties. A first phosphate ester (a reaction product of glycidyl ether cashew nutshell liquid and phosphoric acid) may be used in the B-side in order to improve the elastomeric properties. The silicon pre polymer with cycloaliphatic epoxy group polymer may also contribute to increased open time.

Table 2 provides the technical data of a formulation in accordance with the present teachings at a reaction temperature of 23 °C. "Peak exotherm" may refer to the peak temperature reached upon curing and may be a function of both degree of cross-linking and rate of cure; a higher degree of cross-linking may yield a higher exothermic reaction; a higher rate of cure may yield a higher peak exotherm as the reaction product takes on heat from the exothermic reaction faster than it sheds heat. The mechanical properties were determined according to ASTM D1621. Test samples were compressed to 50% of the dimension of the cubes. The crosshead movement rate was kept constant at 12.7 mm/min.

Table 2

| Physical Characteristics | Example 1 |
|---|---|
| Appearance | Light cream paste |
| Mix Ratio by Volume | 2:1 |
| Temperature Tested | 23°C |
| Time to Expand (sec) | 30 |
| Expansion (%) | 350 |
| Cure Time (min) | 8 |
| Cured Specific Gravity (g/cm$^3$) | 0.30 |
| Peak Exotherm (°C) | 110 |
| **Mechanical Properties** | |
| Peak Stress (kPa) | 36 |
| Peak Load (N) | 22 |
| Modulus (kPa) | 100 |
| Strain at Peak (%) | 33 |
| Stress at Yield (kPa) | 23 |
| Time to recover 100% after 1 week at 50% compression at 23°C (min) | 2 |

Additional examples of formulations in accordance of the present teachings are provided below in Table 3. Amounts are expressed as weight percent. Stoichiometric amounts of phosphate ester precursor to phosphoric acid appear in parentheses.

Table 3

| First Component (A-Side) | Example 2 |
|---|---|
| *Liquid epoxy resin* | 9.0 |
| *Diglycidyl ether of bisphenol F* | 14.3 |
| *Epoxidized sorbitol* | 12.3 |
| *Unmodified epoxy resin* | 12.5 |
| *Hydroxyl-terminated epoxidized polybutadienes* | 12.5 |
| *Aliphatic polyglycol diepoxide* | 4.0 |
| *Trimethylolethane Triglycidyl Ether* | 9.0 |
| *Aramid pulp* | 0.5 |
| *Calcium carbonate (medium fine ground)* | 15.0 |
| *Calcium carbonate (fine particle size)* | 6.0 |
| *Fumed silica* | 1.0 |
| *Wollastonite* | 4.0 |
| TOTAL | 100.0 |
| **Second Component (B-Side)** | |
| *First phosphate acid ester* Epoxy-reactive diluent / $H_3PO_4$ (0.8:1) | 31.8 |
| *Second phosphate acid ester* Epoxy-reactive diluent/ $H_3PO_4$ (1:1) | 21.2 |
| *Third phosphate acid ester* Epoxy-reactive diluent / $H_3PO_4$ (0.8:1) | 42.5 |
| *Aramid pulp* | 0.2 |
| *Fumed silica* | 4.2 |
| TOTAL | 100.0 |

Table 4 provides the technical data of the formulations in accordance with Table 1 at a reaction temperature of 23 °C. The compression modulus may be a function of the compressive stress (force per unit area) applied to a sample and the resulting compression (deformation). Thus, a lower compression modulus is desired typically for elastomeric materials. Given two samples with uniform compression modulus, a sample having a lower density indicates the matrix of the reaction product is stiffer, which may be a product of a higher degree of cross-linking. When observed as a ratio of density to compression modulus, a lower ratio may indicate an overall stiffer matrix of the reaction product. Comparative Example A may be a conventional, die-cut, PSA backed, pre-foamed gasket. Compressive properties were determined according to ASTM D1621 using 25.4 mm cubes. Test samples were compressed to 50% of the dimension of the cubes. The crosshead speed was kept constant at 12.7 mm/min.

Table 4

| | Comparative Example A | Example 3 | Example 4 | Example 5 | Example 6 |
|---|---|---|---|---|---|
| **A-Side & B-Side** | | | | | |
| **Density (g/cm$^3$)** | 0.46 | 0.34 | 0.34 | 0.40 | 0.30 |

| | | | | | |
|---|---|---|---|---|---|
| **Compression Modulus (kPa)** | 170 | 247 | 164 | 216 | 236 |
| **Ratio** | 0.0027 | 0.0014 | 0.0021 | 0.0019 | 0.0013 |

| | **Example 7** | **Example 8** | **Example 9** | **Example 9** | **Example 10** |
|---|---|---|---|---|---|
| **A-Side & B-Side** | | | | | |
| **Density (g/cm$^3$)** | 0.27 | 0.30 | 0.28 | 0.28 | 0.32 |
| **Compression Modulus (kPa)** | 305 | 173 | 103 | 96 | 328 |
| **Ratio** | 0.0009 | 0.0017 | 0.0027 | 0.0029 | 0.0010 |

Additional examples of formulations in accordance of the present teachings are provided below in Table 5. Amounts are expressed as weight percent. Stoichiometric amounts of phosphate ester precursor to phosphoric acid appear in parentheses.

Table 5

| **First Component (A-Side)** | **Example 11** | **Example 12** |
|---|---|---|
| Di-functional glycidyl ether epoxy resin | 11.60 | 20.20 |
| Epoxy phenol novolac resin | 4.83 | |
| Aliphatic multifunctional epoxy resin | 29.95 | 24.04 |
| epoxidized polybutadiene resin | 20.29 | 20.19 |
| Flexibilizer | 5.80 | 7.69 |
| Liquid epoxy resin | 6.76 | 4.81 |
| Silicone pre-polymer. | 6.76 | 8.65 |
| Calcium carbonate | 8.70 | 8.65 |
| Fumed silica | 5.31 | 5.77 |
| TOTAL | 100.0 | 100.0 |
| **Second Component (B-Side)** | | |
| *First phosphate acid ester* Epoxy-reactive diluent / $H_3PO_4$ (0.8:1) | 50.99 | 87.21 |
| *Second phosphate acid ester* Epoxy-reactive diluent / $H_3PO_4$ (1:1) | 39.66 | 5.81 |
| Fumed Silica | 8.22 | 5.81 |
| $H_3PO_4$ 85% | 1.13 | 1.17 |
| Total | 100.00 | 100.00 |

The two-part system may be provided as side-by-side cartridges, pails, or drums. The two-part system may be mixed prior to application on a workpiece. The two-part system may be applied to a workpiece via any suitable dispenser by which the two-part system is mixed before application on the workpiece. For example, the two-part system may be dispensed onto a workpiece via a static mixer that is configured to deliver a mixed curable composition that has a suitable mix ratio, as described herein.

The resulting reaction product provides excellent adhesion to many substrates along with a fast cure time. The resulting reaction product may provide excellent adhesion to glass, metal, polymer (e.g., thermoplastics, thermosets or thermosettables, or elastomers) or any combination thereof. Particularly, the reaction product provides excellent adhesion to thermoplastics.

The two-part system may be cured and/or expanded before or after full assembly of the workpieces upon which the two-part system is applied. For example, the two-part system may be dispensed upon a first workpiece, cured and/or expanded, and then a second workpiece, complementary to the first workpiece, may be applied upon the first workpiece. As another example, the two-part system may be dispensed upon a first workpiece, a second workpiece complementary to the first workpiece may be applied upon the first workpiece, and then the two-part system may be cured and/or expanded. A two-part system that cures and/or expands after the full assembly of the workpiece may expand to fill a space between a first workpiece and a second workpiece. The first workpiece, the second workpiece, or both may include grooves in which the two-part system is dispensed in, expands in, or both. The two-component material may be dispensed in a cavity.

The two-part system may be utilized in transportation applications. The two-part system is utilized in automotive

applications. The two-part system may be utilized in applications including but not limited to vehicle interiors, vehicle exteriors, HVAC ducts, side mirrors, electronics enclosures, tail lamps, head lamps, commercial vehicles, construction, or the like.

The present teachings provide a method that may comprise: providing a two-part system, the two-part system including an A-side (i.e., first component) and a B-side (i.e., second component). The A-side including one or more epoxy resins and the B-side including one or more phosphate esters and optionally phosphoric acid. The A-side and the B-side may be mixed to form a curable composition. The method may include a step of curing the curable composition at a temperature of less than 50°C, thereby forming a reaction product. The method may comprise a step of mixing the first component and the second component to form a reaction prod. The method may comprise a step of wherein the reaction product of the first component and the second component cures at a temperature of less than 50°C. The method may be employed with an A-side that includes one or more epoxy resins, calcium carbonate, or both. The method may be employed with a B-side that includes one or more phosphate esters, phosphoric acid, or both. The method may be employed with and A-side, a B-side, or both having one or more additives.

Use of the teachings herein may result in a gasket that exhibits sufficient flame retardancy to meet one or more of the requirements for demonstrating flame retardancy (e.g., to meet vertical burn and/or smoke density requirements (or some other requirement) as set forth in 14 C.F.R. §25.853 and 14 C.F.R. §25.856 (the United States Code of Federal Regulations for compartment interiors, including but not limited to 14 C.F.R. §25.853(a), and the referenced Appendix F and procedures referenced therein).

As used herein, unless otherwise stated, the teachings envision that any member of a genus (list) may be excluded from the genus; and/or any member of a Markush grouping may be excluded from the grouping.

Unless otherwise stated, any numerical values recited herein include all values from the lower value to the upper value in increments of one unit provided that there is a separation of at least 2 units between any lower value and any higher value. As an example, if it is stated that the amount of a component, a property, or a value of a process variable such as, for example, temperature, pressure, time and the like is, for example, from 1 to 90, preferably from 20 to 80, more preferably from 30 to 70, it is intended that intermediate range values such as (for example, 15 to 85, 22 to 68, 43 to 51, 30 to 32 etc.) are within the teachings of this specification. Likewise, individual intermediate values are also within the present teachings. For values which are less than one, one unit is considered to be 0.0001, 0.001, 0.01, or 0.1 as appropriate. These are only examples of what is specifically intended and all possible combinations of numerical values between the lowest value and the highest value enumerated are to be considered to be expressly stated in this application in a similar manner. As can be seen, the teaching of amounts expressed as "parts by weight" herein also contemplates the same ranges expressed in terms of percent by weight. Thus, an expression in the of a range in terms of "at least 'x' parts by weight of the resulting composition" also contemplates a teaching of ranges of same recited amount of "x" in percent by weight of the resulting composition."

Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints. Unless otherwise stated, a teaching with the term "about" or "approximately" in combination with a numerical amount encompasses a teaching of the recited amount, as well as approximations of that recited amount. By way of example, a teaching of "about 100" encompasses a teaching of 100.

The term "consisting essentially of to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist of, or consist essentially of the elements, ingredients, components or steps.

Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

It is understood that the above description is intended to be illustrative and not restrictive. Many embodiments as well as many applications besides the examples provided will be apparent to those of skill in the art upon reading the above description. The scope of the invention should, therefore, be determined not with reference to the above description, but should instead be determined with reference to the appended claims.

## Claims

**1.** A method comprising:

**a.** providing a two-part system, the two-part system including a first component and a second component, the first

component including one or more epoxy resins and the second component including one or more phosphate esters; and

**b.** mixing the first component and the second component to form a reaction product; and

wherein, upon mixing the first component and second component a cured elastomeric composition is formed in a temperature of about 0°C to about 50°C,

including

- forming a sealant with the cured composition, and
- dispensing the cured composition upon a workpiece consisting of an automobile component.

**2.** The method of claim 1, wherein the second component includes two or three different phosphate esters.

**3.** The method of claim 1 or 2, wherein the first component includes one or more first component additives.

**4.** The method of claim 1 or claim 3, wherein the second component includes one or more second component additives.

**5.** The method of claim 1 or claim 4, wherein the one or more first component additives includes calcium carbonate.

**6.** The method of claim 1 or claim 5, wherein curing occurs at a temperature of from about 10 °C to about 35 °C.

**7.** The method of claim 1 or claim 6, wherein curing occurs at a temperature of from about 15 °C to about 25 °C.

**8.** The method of claim 1 or claim 7, wherein a cure time of the cured composition is from about 5 minutes to about 15 minutes.

**9.** The method of claim 1 or claim 8, wherein a cure time of the cured composition is from about 7 minutes to about 10 minutes.

**10.** The method of claim 1 or claim 9, wherein the cured composition has a volume expansion from about 100% to about 800%.

**11.** The method of claim 1 or claim 10, wherein the cured composition has a volume expansion from about 400% to about 500%.

**12.** The method of claim 1 or claim 11, wherein the method is free of the addition of curing agents, curing accelerators, or both.

## Patentansprüche

**1.** Ein Verfahren, umfassend:

**a.** Bereitstellen eines Zweikomponentensystems, wobei das Zweikomponentensystem eine erste Komponente und eine zweite Komponente umfasst, wobei die erste Komponente ein oder mehrere Epoxidharze und die zweite Komponente einen oder mehrere Phosphatester umfasst; und

**b.** Vermischen der ersten Komponente und der zweiten Komponente, um ein Reaktionsprodukt zu bilden; und

wobei beim Vermischen der ersten Komponente und der zweiten Komponente eine ausgehärtete elastomere Zusammensetzung bei einer Temperatur von etwa 0 °C bis etwa 50 °C gebildet wird,

umfassend

- das Herstellen einer Dichtungsmasse mit der ausgehärteten Zusammensetzung, und
- das Auftragen der ausgehärteten Zusammensetzung auf ein Werkstück, das aus einem Automobilbauteil besteht.

**2.** Das Verfahren nach Anspruch 1, wobei die zweite Komponente zwei oder drei verschiedene Phosphatester enthält.

**3.** Das Verfahren nach Anspruch 1 oder 2, wobei die erste Komponente ein oder mehrere Additive der ersten Komponente enthält.

**4.** Das Verfahren nach Anspruch 1 oder Anspruch 3, wobei die zweite Komponente ein oder mehrere Additive der zweiten Komponente enthält.

**5.** Das Verfahren nach Anspruch 1 oder Anspruch 4, wobei das eine oder die mehreren Additive der ersten Komponente Calciumcarbonat enthalten.

**6.** Das Verfahren nach Anspruch 1 oder Anspruch 5, wobei die Aushärtung bei einer Temperatur von etwa 10 °C bis etwa 35 °C erfolgt.

**7.** Das Verfahren nach Anspruch 1 oder Anspruch 6, wobei die Aushärtung bei einer Temperatur von etwa 15 °C bis etwa 25 °C erfolgt.

**8.** Das Verfahren nach Anspruch 1 oder Anspruch 7, wobei die Aushärtungszeit der ausgehärteten Zusammensetzung zwischen etwa 5 Minuten und etwa 15 Minuten beträgt.

**9.** Das Verfahren nach Anspruch 1 oder Anspruch 8, wobei die Aushärtungszeit der ausgehärteten Zusammensetzung etwa 7 Minuten bis etwa 10 Minuten beträgt.

**10.** Das Verfahren nach Anspruch 1 oder Anspruch 9, wobei die ausgehärtete Zusammensetzung eine Volumenausdehnung von etwa 100 % bis etwa 800 % aufweist.

**11.** Das Verfahren nach Anspruch 1 oder Anspruch 10, wobei die ausgehärtete Zusammensetzung eine Volumenausdehnung von etwa 400 % bis etwa 500 % aufweist.

**12.** Das Verfahren nach Anspruch 1 oder Anspruch 11, wobei das Verfahren ohne Zugabe von Härtungsmitteln, Härtungsbeschleunigern oder beidem auskommt.

## Revendications

**1.** Procédé comprenant :

**a.** la mise à disposition d'un système à deux composants, ledit système à deux composants comprenant un premier composant et un deuxième composant, le premier composant comprenant une ou plusieurs résines époxy et le deuxième composant comprenant un ou plusieurs esters de phosphate; et
**b.** le mélange du premier composant et du deuxième composant pour former un produit de réaction; et
dans lequel, lors du mélange du premier composant et du deuxième composant, une composition élastomère durcie est formée à une température comprise entre environ 0 °C et environ 50 °C,
comprenant

- la formation d'un produit d'étanchéité à partir de la composition durcie, et
- l'application de la composition durcie sur une pièce constituée d'un composant automobile.

**2.** Procédé selon la revendication 1, dans lequel le deuxième composant comprend deux ou trois esters de phosphate différents.

**3.** Procédé selon la revendication 1 ou 2, dans lequel le premier composant comprend un ou plusieurs additifs du premier composant.

**4.** Procédé selon la revendication 1 ou la revendication 3, dans lequel le deuxième composant comprend un ou plusieurs additifs du deuxième composant.

**5.** Procédé selon la revendication 1 ou la revendication 4, dans lequel le ou les additifs du premier composant comprennent du carbonate de calcium.

**6.** Procédé selon la revendication 1 ou la revendication 5, dans lequel le durcissement a lieu à une température comprise entre environ 10 °C et environ 35 °C.

7. Procédé selon la revendication 1 ou la revendication 6, dans lequel le durcissement a lieu à une température comprise entre environ 15 °C et environ 25 °C.

8. Procédé selon la revendication 1 ou la revendication 7, dans lequel le temps de durcissement de la composition durcie est compris entre environ 5 minutes et environ 15 minutes.

9. Procédé selon la revendication 1 ou la revendication 8, dans lequel le temps de durcissement de la composition durcie est compris entre environ 7 minutes et environ 10 minutes.

10. Procédé selon la revendication 1 ou la revendication 9, dans lequel la composition durcie présente une expansion volumique comprise entre environ 100 % et environ 800 %.

11. Procédé selon la revendication 1 ou la revendication 10, dans lequel la composition durcie présente une expansion volumique comprise entre environ 400 % et environ 500 %.

12. Procédé selon la revendication 1 ou la revendication 11, **caractérisé en ce qu'**il ne comporte pas l'ajout d'agents de durcissement, d'accélérateurs de durcissement, ou des deux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016149700 A1
- US 3282863 A
- US 62828693
- US 5648401 A